# NEW EUROPEAN PATENT SPECIFICATION

(11) **EP 2 961 951 B2**
(45) Date of publication and mention of the opposition decision: **23.10.2019**
(45) Mention of the grant of the patent: 30.11.2016
(21) Application number: 15738812.5
(22) Date of filing: 25.03.2015
(51) Int. Cl.: F01M 1/16, F01M 1/08, F01M 1/14

(54) **METHOD AND SYSTEM FOR DOSING LUBRICATION OIL INTO CYLINDERS**
VERFAHREN UND SYSTEM ZUR DOSIERUNG VON SCHMIERÖL IN ZYLINDER
PROCÉDÉ ET SYSTÈME DE DOSAGE D'HUILE DE LUBRIFICATION DANS DES CYLINDRES

(30) Priority: 25.03.2014 DK 201470144
(43) Date of publication of application: 06.01.2016
(73) Proprietor: Hans Jensen Lubricators A/S, 9560 Hadsund (DK)
(72) Inventor: BAK, Peer, 9300 Sæby (DK)
(74) Representative: Nielsen, Leif
(86) International application number: PCT/DK2015/050067
(87) International publication number: WO 2015/144182

(56) References cited:
- EP-A1- 0 509 189
- EP-A1- 0 509 189
- EP-A1- 0 509 189
- EP-A1- 1 767 751
- EP-A1- 2 295 208
- EP-A2- 1 582 706
- EP-A2- 1 582 706
- EP-A2- 1 582 706
- EP-A2- 1 586 751
- EP-A2- 1 586 751
- EP-A2- 1 586 751
- WO-A1-2010/054653
- WO-A1-2010/054653
- WO-A2-2006/108629
- DE-A1- 10 311 493

## Description

### Field of the Invention

The present invention concerns a method for dosing lubricating oil into cylinders, preferably in two-stroke diesel engines, for example marine engines, the method including steps of:
- delivering a dosed amount of lubricating oil under pressure from a lubricating apparatus to injection units provided in walls of the cylinders, as a number of injection units are used for each cylinder;
- detecting the engine load;
- using electronic control for timing a closing time of the exhaust valve of the cylinder in dependence of the detection of the engine load, as an adjustment of the closing time of the exhaust valve is performed in relation to the actual engine load; and
- using electronic control for timing the lubricating oil delivery.

The invention further includes a system for dosing lubricating oil into cylinders, preferably in two-stroke diesel engines, for example marine engines, the system including:
- injection units provided in the walls of the cylinders as a number of injection units are used for each cylinder;
- a lubricating apparatus for delivering a dosed amount of lubricating oil under pressure to the injection units;
- means for detecting the engine load;
- an exhaust valve connected to an actuator for displacing the exhaust valve;
- a control unit for electronic control and timing the closing time of the exhaust valve of the cylinder depending on the detection of the engine load, as a signal is transmitted to the actuator, and as an adjustment of the closing time of the exhaust valve in relation to the actual engine load is performed, the control unit also adapted for electronic control and timing of the lubricating oil delivery.

### Background of the Invention

In connection with the increasing use of electronic controls in two-stroke diesel engines, it has been possible to establish new ways in which to operate an engine. Experience shows that by controlling the exhaust valves of the engine differently, it has been possible to improve the emission level of the engine (lower NOₓ and smokeless operation).

Moreover, it has appeared that also by low load or partial load it is possible to improve the performance of the engine by adjusting the closing time of the exhaust valve in relation to the actual load of the engine (see WO 2010/054653).

When presently using cylinder lubricating systems on two-stroke diesel engines, this is typically done by timing delivery of the lubricating oil such that the piston with piston rings pass during the delivery of lubricating oil into the cylinder. Via the piston rings it hereby becomes possible to provide a distribution of the lubricating oil. This means that the timing is the same irrespective of the engine load as the oil is always sought to be delivered directly into the ring assembly.

In recent years, new types of cylinder lubricating systems have been introduced. By these new lubricating oil systems, oil is delivered directly into the cylinder before passage of the piston. By these systems the closing time of the exhaust valve will influence the conditions that are significant to the time of injection.

For example, there exist an SIP lubricating system which e.g. is described in WO/0028194. In this system, the air swirl formed within the cylinder during the exhaust phase is used for assisting distribution of an atomised lubricating oil on the cylinder wall. The air swirl therefore contributes to transporting oil droplets onto the cylinder wall before passage of the piston. A better distribution of the lubricating oil on the cylinder wall is achieved in this way. The lubricating oil is distributed upwards in the cylinder by the air swirl over a relatively large area while at the same time the piston with piston rings assist in distributing the lubricating oil.

On new electronically controlled engines it is very common today to operate with variable timing of the exhaust valves.

In the same way, operation is also performed today with variable timing on more traditional two-stroke diesel engines (MC, RTA or UEC engines). It has also appeared here that there is a large potential with regard to operation at low load and emission characteristics.

There are different approaches as to how the timing of the exhaust valves is to be adjusted. But typically an adjustment in the order of 15-30° distributed across the entire load range of the engine is performed. It is not possible to set up unequivocal displacements of the closing times of the exhaust valves in dependence of the load. Instead it is necessary to determine some empirical data by experiments on the specific engine. Hereby it is possible empirically to ascertain which adjustments/displacements of closing times that operate the best on the specific engine.

By the lubricating systems used today it is possible to time the injection time of the lubricating oil at fixed times (at a fixed angle). In some systems it is also possible to vary the injection time based on a distribution key.

There are no systems in which the displacement of the closing time of the exhaust valve forms part of the timing of the injection time of the lubricating oil.

It has appeared that several advantages can be achieved by establishing a timing of the time for delivery of the lubricating oil which is not only dependent on the position of the piston but also dependent on the engine load. This is particularly the case with engines operating with a displacement of the closing time of the exhaust valve.

Thus it has appeared that in lubricating oil systems where the air swirl contributes to distribution of the lubricating oil there may be achieved advantages of timing the delivery in dependence of the closing of the exhaust valve. Thereby it becomes possible to achieve the most optimal air swirl in order to contribute to the transport of oil droplets and at the same time avoid that the atomised lubricating oil is blown out together with the exhaust gases.

### Object of the Invention

It is the object of the present invention to indicate a method and a system of the kind indicated in the introduction where it is possible to improve the emission of the engine and to enhance utilisation of the lubricating oil.

### Description of the Invention

This is achieved according to the present invention by a method of the kind mentioned in the introduction, which is peculiar in that the method further includes steps as described in the characterising part of claim 1.

The system according to the invention is peculiar in that it further includes:
features as described in the characterising part of claim 7.

By a method and lubricating system according to the invention it thus becomes possible to vary the timing of lubricating oil delivery in dependence of the load.

Generally speaking, the lubricating oil system and the method according to the invention operate by timing times for lubricating oil delivery with regard to the actual load of the engine. A more optimal use of the lubricating oil can thus be achieved. Hereby it is possible to reduce the amount of lubricating oil to be used at the same time as it becomes possible to reduce emission under an actual engine load.

By a method and a lubricating system according to the invention is further achieved the advantage that the load-dependent lubricating oil delivery can be combined with different operational profiles that are defined by the user for a given situation.

This means that a system according to the invention in the first instance contains the same components that already are present in an engine system.

A method and a system according to the invention can thus be used together with various systems for delivering the lubricating oil. Examples of such systems are mentioned in WO 2008/009291, DK 173512, EP 1586751 and EP 1350929.

These prior art lubricating oil delivery systems include a pickup system on the flywheel (for detecting data for position, speed and direction) which is used for determining the timing of the electronic control of the lubricating oil delivery and a pickup system for detecting the actual engine load.

According to the present invention, use can be made of signals from these known pickup systems. It is advantageous to use the prior art designs, though other systems for direct or indirect detection of corresponding engine load data and flywheel data can be used as well.

Besides detection of these data from the signals of the pickup systems, according to the present invention it will also be advantageous to know the position of the exhaust valve.

This can advantageously be established by defining data that document an experiential basis of when the exhaust valve closes in relation to the actual engine load. This can advantageously be established in the form of a curve or a table. These data are determined in beforehand and stored in the control unit for the electronic control and timing. The information about the variable closing time for the exhaust valve is known from the engine control by which the exhaust valve is controlled.

Thus it is noted that the pickup signal from the engine flywheel can still be used for determining the general timing of the lubricating oil dosing. According to the present invention, it is possible to correct the timing based on the engine load which is advantageously represented by the closing time of the exhaust valve. By a method and a system according to the present invention it is thus still necessary to know position, speed and direction of the engine flywheel in order to perform correct timing of the lubricating oil delivery.

Alternatively, in order to use data from the actual engine load for making a table lookup that defines the timing of lubricating oil delivery or closing time of the exhaust valve, controlling the timing of lubricating oil delivery can be directly dependent on a signal for the position of the exhaust valve. In principle, it is thus possible to time lubricating oil delivery directly from a direct or indirect position measurement of the exhaust valve.

It is noted that by using variable timing of exhaust valves, the timing of the lubricating oil delivery is corrected; but independently thereof the lubricating system may still vary the amount of lubricating oil based on known principles for lubricating oil dosage.

As known from e.g. WO 2008/009291, the amount of lubricating oil can be varied depending on the load (such that the amount of lubricating oil per kW yielded by the engine is always constant) or via another user-defined control algorithm.

There are different ways of measuring and determining the engine load. This can be effected directly or indirectly.

An embodiment of the method according to the invention is peculiar in that the method further includes steps of:
- detecting a closing time for the exhaust valve of the cylinder for an actual cylinder load;
- applying the detection of the closing time to adjustment of timing of the lubricating oil delivery in dependence on the closing time of the exhaust valve of the cylinder such that the timing of the lubricating oil delivery is varied depending on the engine load.

This means that the closing time can be pre-defined by a table/curve depending on the engine load, and that the detection is thus performed by such a table/curve.

As mentioned above, in newer electronic engines there is operated with a variable timing of the opening and closing of the exhaust valves depending on the engine load. Therefore, using the closing time of the exhaust valve for adjusting the timing of the lubricating oil delivery will constitute a technically simple solution for achieving a load-dependent variation of the lubricating oil delivery.

A further embodiment of the method according to the invention is peculiar in that the method further includes steps of:
- application of the detection of the closing time of the exhaust valve of the cylinder for an actual cylinder load also including that the lubricating oil amount is varied in dependence of the engine load.

A method and a system according to the present invention can also be used for regulating the lubricating oil amount based on the closing time of the exhaust valve.

This is, for example, possible if a lubricating oil control algorithm is made, after which is also performed regulation of the lubricating oil amount in dependence of the closing time of the exhaust valve. The latter can e.g. be used if the amount of lubricating oil to be dosed becomes too large to be delivered before passage of the piston, or too large in relation to the period where the upwardly going air swirl is ideal for injection of lubricating oil.

Such a control algorithm can be designed such that for periods of time and depending on the engine load, the amount of lubricating oil is varied, but still complies with the overall control algorithm. The latter means that a load-dependent lubricating oil dosing can be established wherein a constant feed rate (g/kWh) is achieved over a total period of time, but possibly having a varying feed rate for shorter or longer periods of time within the total period of time.

A further embodiment of the method according to the invention is peculiar in that the method further includes steps of:
- using a position pickup for directly or indirectly determining the position of the exhaust valve and detecting this position; and
- using the detection of the position pickup for timing the lubricating oil delivery.

Using a position pickup connected with the exhaust valve may e.g. be provided in the form of an airflow meter or in the form of a mechanical measurement directly on the exhaust valve. Measurement of position can thus be an indirect or direct determination of the position of the exhaust valve. Also in this embodiment, the result of the measurement will be transmitted to the control unit where determination and detection of the position of the exhaust valve will be effected. The control unit then transmits a control signal to the lubricating apparatus.

The result of the detection is transmitted to the control unit where determination and detection of the position of the exhaust valve will take place. The control unit then transmits a control signal to the lubricating apparatus. Here, timing can occur, for example by using an electronically controlled actuator for activating one or more dosing pistons. These dosing pistons are operated in a way such that both amount of lubricating oil and timing occur according to pre-defined algorithms that can allow for operational profiles and at the same time be dependent on the engine load.

A load pickup connected with the cylinder may e.g. be provided in the form of a pressure gauge. A measurement of pressure in the cylinder can be used for informing the control as to when the exhaust valve closes, e.g. via a table look-up. The pressure measurement can thus be regarded as an indirect determination of the time of closing the exhaust valve.

A further embodiment of the method according to the invention is peculiar in that the method further includes steps of:
- applying a pickup system on the flywheel of the engine for detecting data for position, direction and speed simultaneously with using the load pickup or the position pickup;
- applying data from the pickup system on the flywheel of the engine for backup and/or control of the timing of the lubricating oil delivery.

A pickup system on the flywheel of the engine for detecting data for position, direction and speed simultaneously with using the load pickup or the position pickup is a simple way of achieving backup and/or control of the timing of the lubricating oil delivery.

A further embodiment of the method according to the invention is peculiar in that the method further includes steps of:
- defining various profiles for operation of the engine, for example slow steaming, MILLER timing, or other user-specified displacement; and
- timing of lubricating oil delivery depending on load with a selected operational profile.

A load-dependent lubricating oil delivery combined with various operational profiles provides an advantage as the user still can use special operational profiles that may be required for use in a given situation. The load-dependent lubricating oil delivery can also here give a reduction in the amount of lubricating oil to be used at the same time as it will be possible to reduce emission under an actual operational profile.

An embodiment of the system according to the invention is peculiar in that the means for detecting the engine load include a pickup system for detecting the closing time of the exhaust valve of the cylinder at an actual engine load.

Using a pickup system for detecting the closing times of the exhaust valves is a technically simple solution for establishing the load-dependent variation in the lubricating oil delivery.

A further embodiment of the system according to the invention is peculiar in that the pickup system includes:
- a load pickup for direct or indirect determination of the position of the exhaust valve and detecting this position; and/or
- a position pickup for direct or indirect determination of the position of the exhaust valve and detecting this position; the system further including
- a pickup system on the flywheel of the engine for detecting data for position, direction and speed simultaneously with using the load pickup or the position pickup.

As mentioned above, a pickup system on the flywheel of the engine for detecting data for position, direction and speed simultaneously with using the load pickup or the position pickup is a simple way of achieving backup and/or control of the timing of the lubricating oil delivery.

Using a pickup which directly or indirectly indicates the position of the exhaust valve and using the signal from this pickup for timing can make the pickup system on the flywheel superfluous. However, it is advantageous that alternatively it can be used as a backup or as a control option for the timing. This will, however, only apply to systems that feed lubricating oil and the piston before its passage of the injection units, e.g. SI valves.

A method and a system according to the invention can be used together with prior art systems for delivering the lubricating oil. Examples of such systems are described in WO 2008/009291, DK 173512 and EP 1350929.

The advantages of the present invention are hereby combined with the advantages of the prior art delivery systems with precise control of the supply of lubricating oil.

### Description of the Drawing

The invention will be explained in more detail below with reference to the accompanying drawing, where:
- Fig. 1: shows a schematic view of a layout of a system according to the invention and where the piston is situated in a lower position under scavenging air ducts;
- Fig. 2: shows a partial view of the system shown in Fig. 2, but with the piston in a position under injection units delivering the lubricating oil above the piston;
- Fig. 3: shows a partial view corresponding to Fig. 2 but with the piston in a position opposite the injection units;
- Fig. 4: shows a curve illustrating a possible adjustment of the closing time of the exhaust valve in relation to actual engine load;
- Fig. 5: shows a schematic engine design with several cylinders and several lubricating apparatuses to which a system according to the invention can be applied; and
- Fig. 6: shows a sectional view through an embodiment of a lubricating apparatus for use in a system according to the invention.

### Detailed Description of Embodiments of the Invention

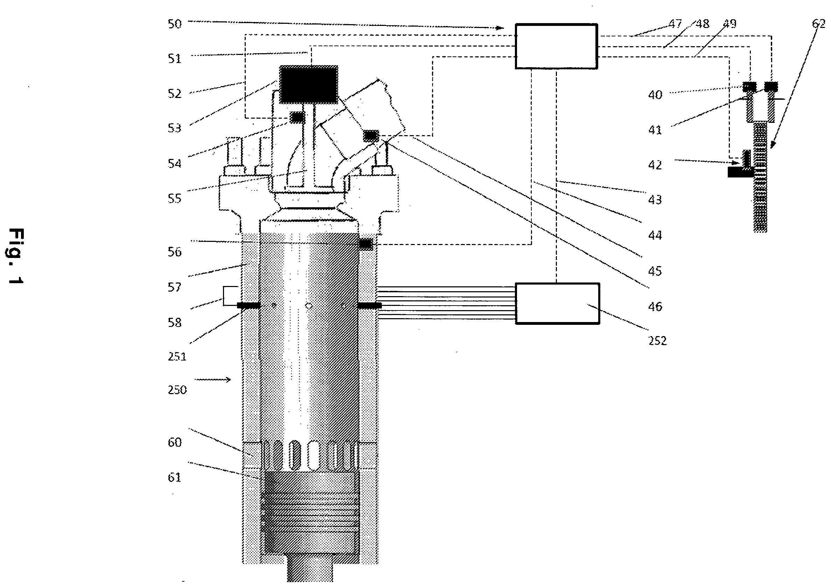

In Fig. 1 is illustrated a layout of a system according to the invention in principle. In Fig. 1, only the elements necessary for understanding the invention are shown. More elements will be needed in an actual system.

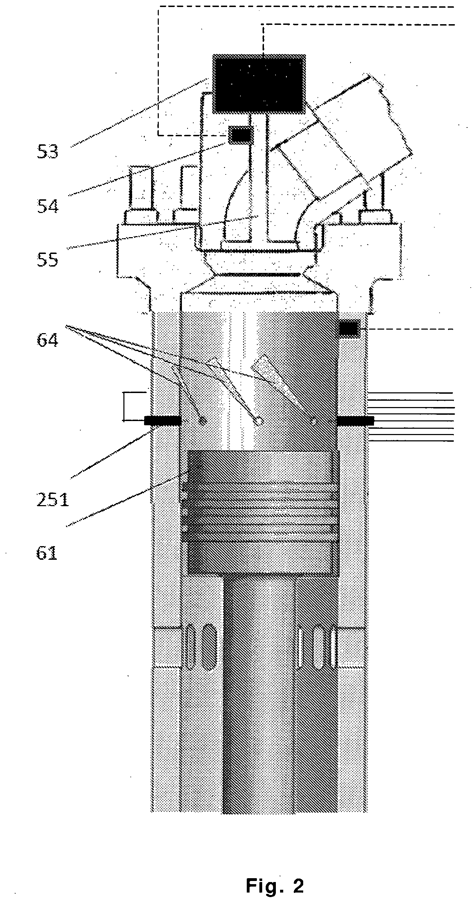

The shown system contains the following elements:
A primary flywheel pickup 40 for detecting data for position, speed and direction.
A secondary flywheel pickup 41 for detecting data for position, speed and direction.
An alternative load pickup 42, e.g. in the form of a torque meter.
A line for control signal 43 for cylinder lubricating apparatus (data for time, amount and frequency).
Signal 44 from load pickup 56, e.g. in the form of a measurement of cylinder mean pressure.
Signal 45 from alternative exhaust valve position pickup 46.
Alternative pickup 46 for position of exhaust valve 55 in the form of a direct or indirect indication of valve position, e.g. in the form of an airflow meter.
A line 47 for signal from secondary flywheel pickup 41.
A line 48 for signal from primary flywheel pickup 40.
A line 49 for signal from alternative load pickup 42.
Central or decentralised control unit 50 for controlling cylinder lubrication. The control unit 50 can also be made as a central or decentralised unit that controls the entire engine, including opening and closing of exhaust valve and fuel valve.
A line 51 for signal for exhaust valve opening/closing.
A line 52 for signal from position pickup 54 for exhaust valve position.
Actuator 53 for controlling exhaust valve 55.
Pickup 54 for position of exhaust valve 55.
Exhaust valve 55.
Load pickup 56 for engine load, e.g. in the form of a pressure gauge.
The cylinder 250 in the engine and in which the piston 61 is displaceably located.
Wall 57 in cylinder 250.
Pipe 110 for supplying cylinder lubricating oil from the lubricating apparatus 252.
Injection unit 251 for delivery of lubricating oil in atomised or jetted form with delivery of the lubricating oil above the piston 61.
Scavenging air ducts 60.
Piston 61 with piston rings.
Flywheel 62.
Lubricating apparatus 252 for delivery of timed lubricating oil, e.g. in the form of a lubricating apparatus as disclosed in WO 2008/009291, DK173512 and EP 1350929.
Lubricating oil 64 (see Fig. 2) supplied in atomised or jetted condition above the piston 61 before its passage of the injection units 251.

In Figs. 1 to 3 are shown the same embodiment of a system according to the invention. In these three Figures appears a sectional view through a cylinder with the piston 61 and a series of injection units 251 which are disposed in a ring area of the cylinder wall 57 and connected with the lubricating apparatus 252 (only shown in Fig. 1).

In Fig. 1, the piston 61 is seen in a lower position with its top side under the scavenging air ducts 60 of the cylinder.

In Fig. 2, the piston 61 is seen in a middle position with its top side under the scavenging air ducts 60 of the cylinder. The lubricating oil 64 is delivered above the piston 61 before the latter passes the injection units 251. Injection of lubricating oil 64 is performed from each injection unit 251 directly on the ring area of the cylinder wall 57. The delivery occurs at a position above the piston 61 immediately before the piston passes the ring area during its upward movement.

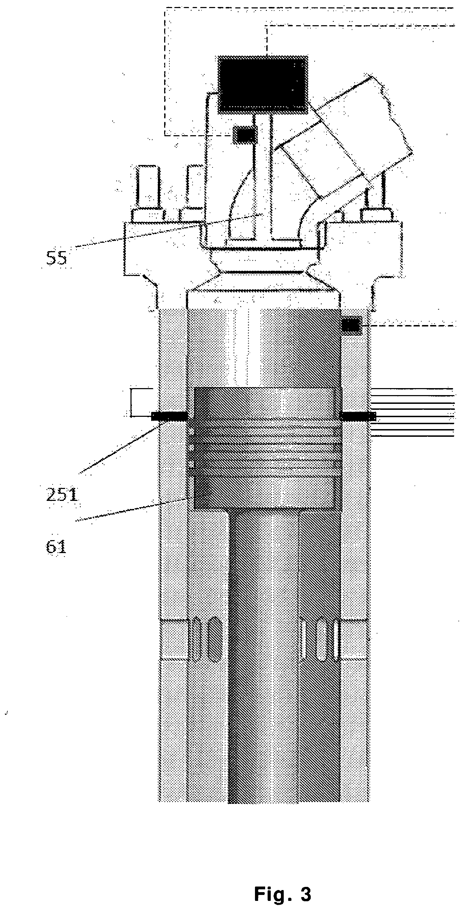

Fig. 3 shows a situation where the injection units 251 are situated at a position opposite the piston 61.

If so desired, injection of lubricating oil between an uppermost piston ring and a lowermost piston ring can be performed from each injection unit directly onto the piston 61 during the upward movement of the piston.

Also, injection of lubricating oil from each injection unit can be performed directly on a ring area of the cylinder wall at a position under the piston 61 immediately before the piston is passing the ring area during its downward movement.

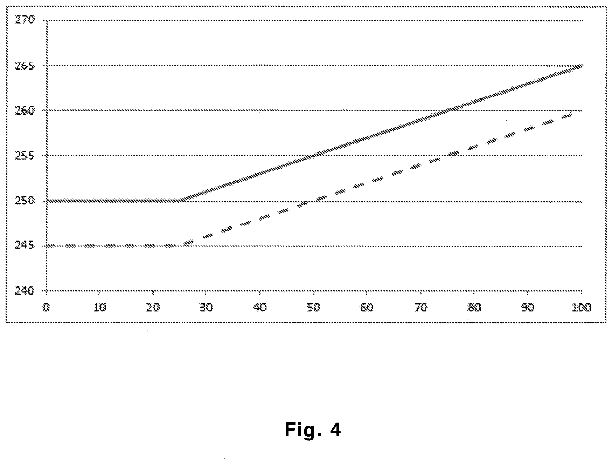

Fig. 4 is a curve showing a possible adjustment of the closing time of the exhaust valve in relation to actual engine load. The closing time is expressed by the angle of the position of the exhaust valve.

The X-axis indicates the engine load measured in % of full engine load.

The Y-axis indicates angles that are measured from bottom dead centre of the specific cylinder.

The solid line curve shows angle for closed exhaust valve depending on actual engine load.

The solid line curve shows an example of the closing time of the exhaust valve. This angle is not unequivocal as we are speaking of a theoretical and a practical closing time. For example, it can better be defined when the exhaust valve is 95% closed than when it is fully closed. However, if just which type of closing time has been determined, this can be used for defining when the lubricating oil dosing is to take place.

The broken line curve shows the angle for finished lubricating stroke (timing of the lubricating apparatus).

The lowermost curve on the Figure shows an example of when the lubricating oil dosing is to be finished (= timing point) in relation to the actual engine load. The angles are typically measured from bottom dead centre of the specific cylinder.

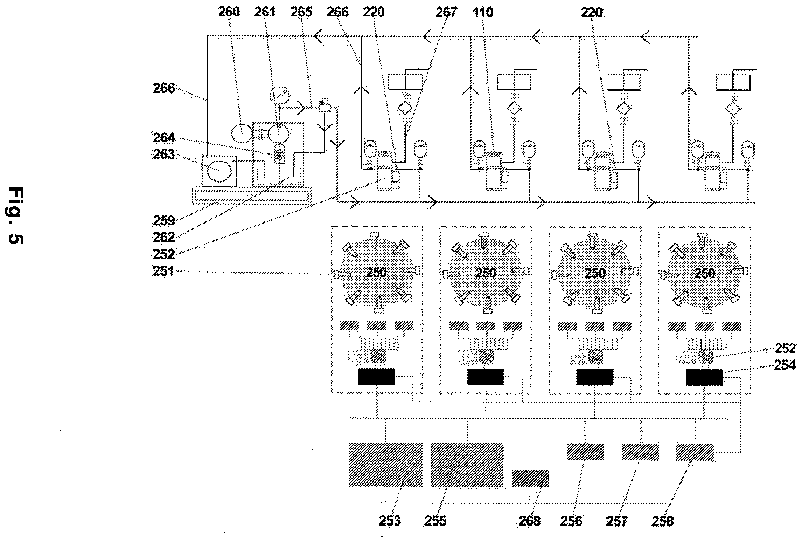

Fig. 5 shows an engine design and a lubricating system with several cylinders and more lubricating apparatuses. The system according to the invention can be used in this engine design. This engine design and this lubricating system are described in more detail in WO 2008/009291.

Fig. 5 shows schematically four cylinders 250, and on each cylinder appears eight injection nozzles 251. The lubricating apparatuses 252 are connected with a central computer 253, with local control units 254 typically for each single lubricating apparatus 252. The central computer 253 is coupled in parallel with a further control unit 255 constituting a backup for the central computer. In addition, there is established a monitoring unit 256 monitoring the pump (can be a hydraulic pump or a hydraulic station), a monitoring unit 257 monitoring the load and a monitoring unit 258 monitoring the position of the crankshaft.

In the upper part of Fig. 5 there is shown a hydraulic station 259 comprising a motor 260 driving a pump 261 in a tank 262 for hydraulic oil. The hydraulic station 259 furthermore includes a cooler 263 and a filter 264. System oil is pumped via supply line 265 on to the lubricating apparatus via a valve 220. The hydraulic station is furthermore connected with a return line 266 which is also connected with the lubricating apparatus via a valve.

Lubricating oil is forwarded to a lubricating apparatus 252 via a line 267 from a lubricating oil supply tank (not shown). The lubricating oil is forwarded from the lubricating apparatus via lines 110 to the injection nozzles 251.

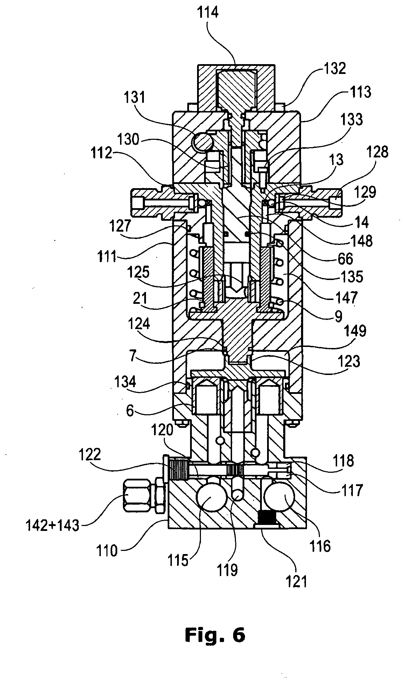

Fig. 6 shows an embodiment of a lubricating apparatus that may be used in a system according to the invention. This lubricating apparatus is described in more detail in WO 2008/009291.

The lubricating apparatus is made up of a bottom part 110 where solenoid valves 115 and 116 for activating the apparatus are mounted. At the side of the bottom part 110, screw joints are provided for system oil pressure supply 142 and system oil pressure return to tank 143.

The driving oil may be supplied through two solenoid valves, of which one is a primary solenoid valve 116 and the other is a secondary solenoid valve 115.

In the initial position, it is the primary solenoid valve 116 which is active. The driving oil is hereby conducted from the associated supply screw joint 142 to the primary solenoid valve 116 and via a switch valve 117 into the apparatus through a distribution channel 145 to the group of associated hydraulic pistons. This situation is shown in Fig. 5.

In case that the primary solenoid valve 116 fails it is possible automatically to connect the secondary solenoid valve 115. This valve is connected by activating the secondary solenoid valve 115.

An associated distribution channel is hereby pressurised. This pressure entails that the switch valve 117 is displaced to the right, whereby the connection between the primary solenoid valve 116 and the associated distribution channel is interrupted. The pressure is hereby removed from the hydraulic pistons connected to this solenoid valve 116.

By activating the secondary solenoid valve 115, the associated distribution channel and the associated hydraulic pistons are pressurised. This causes that the distribution plate 7 is then driven by the oil conducted into the apparatus via the secondary solenoid valve 115.

The switch valve 117 may be equipped with a spring 119. In case of lack of supply pressure through the secondary solenoid valve, the spring will thus automatically put the switch valve 117 back to the above initial position.

The switch valve may be equipped with a restrictor so that this returning of the switch valve can be delayed. The switch valve may be equipped with a restrictor so that this returning of the switch valve can be delayed. On Fig. 6, the restriction is determined by a slot formed between a drain-pin 118 and the switch valve 117.

When each of the solenoid valves is connected to a separate group of hydraulic pistons, independence between the solenoid valves is ensured. When shifting between the primary solenoid valve 116 and the secondary solenoid valve 115, the switch valve 117 will ensure that the pressure is removed from the primary group of hydraulic pistons and thereby enable operation of the secondary solenoid valve 115, even in cases where the primary solenoid valve is blocked.

Pos. 121 shows a blanking screw.

Pos. 122 shows a combined blanking screw/end stop that partly act as end stop for the pawl 120 of the switch valve 117 and partly via a (not shown) packing also having a sealing function.

Above the hydraulic pistons 6 there is a distributor plate 7. The plate is shown here as a two-part design with an upper distributor plate member 125 and a lower distributor plate member 123. The dosing pistons 21 are mounted in/on the upper distributor plate member 125. In apparatuses where various oils are used for drive and lubrication, there is a piston packing 124 between the upper and lower distributor plate member. In principle, one may also suffice with using one kind of oil for drive oil as well as for lubricating oil.

Around the dosing pistons 21 there is a common return spring 9 which returns the pistons 21 after disconnecting the supply pressure on the hydraulic pistons 6. Around the return spring 9 there is a small lubricating oil reservoir 147 which is externally delimited by a base block 111. The lubricating oil is supplied through a separate screw joint with packings 138 and 139. The apparatus may optionally be equipped with a venting screw with packing 15 and 16.

Above the base block 111 the cylinder block 112 is located where the dosing pistons 21 are disposed for their reciprocating movement. Above the dosing pistons 21 there is a pump chamber 148. In this chamber there is an outlet with a non-return valve ball 13 which is biased by a spring 14. Furthermore, there is provided a screw joint 128 connected directly with the non-return valves/SIP valves in the cylinder wall.

For adjusting the stroke, in this embodiment there is shown an arrangement with a motor 132 coupled to a worm drive 131 which via a worm wheel 130 adjusts the stroke by changing the position on set pin/set screw 66.

In this embodiment, it is possible to adjust the stroke by changing the position of the stroke stop. This is different from the previous embodiment where a fixed point of origin was used and where the stroke was adjusted subsequently.

In order to control the actual stroke length, a sensor/pickup unit 114 is mounted in continuation of set pin/set screw 66 for detecting the stroke, e.g. in the form of an encoder or a potentiometer.

Pos. 113 shows a housing for the set pin/set screw arrangement.

Pos. 124 shows a piston packing sealing between the two spaces 149 and 147 with leak oil bypassing the hydraulic pistons 6 at the drive oil side at the bottom and the lubricating oil at the top, respectively.

Pos. 127 shows an O-ring sealing between the base block 111 and the cylinder block 112.

Pos. 133 shows a fastening screw for fastening a bearing case for the worm wheel 130.

Pos. 134 shows an O-ring sealing between the bottom plate 110 and the base block 111.

## Claims

1. A method for dosing lubricating oil into cylinders, preferably in two-stroke diesel engines, for example marine engines, the method including steps of:
- delivering a dosed amount of lubricating oil under pressure from a lubricating apparatus to injection units provided in walls of the cylinders, as a number of injection units are used for each cylinder;
- detecting the engine load;
- using electronic control for timing a closing time of the exhaust valve of the cylinder in dependence of the detection of the engine load, as an adjustment of the closing time of the exhaust valve is performed in relation to the actual engine load; and
- using electronic control for timing the lubricating oil delivery, **characterised in that** the method further includes steps of:
- establishing data for direct or indirect determination of the engine load; and
- applying data of the engine load to adjustment of timing of the lubricating oil delivery such that the timing of the lubricating oil delivery is varied in dependence of the engine load, wherein the method further includes steps of:
- detecting a closing time for the exhaust valve of the cylinder for an actual cylinder load;
- applying the detection of the closing time to adjustment of timing of the lubricating oil delivery in dependence on the closing time of the exhaust valve of the cylinder such that the timing of the lubricating oil delivery is varied depending on the engine load.

2. Method according to claim 1, **characterised in that** the method further includes steps of:
- application of the detection of the closing time of the exhaust valve of the cylinder for an actual cylinder load also including that the lubricating oil amount varies in dependence of the engine load.

3. Method according to claim 2, **characterised in that** the method further includes steps of:
- using a position pickup for directly or indirectly determining the position of the exhaust valve and detecting the position thereof;
- using the detection of the position pickup for timing the lubricating oil delivery.

4. Method according to claim 2 or 3, **characterised in that** the method further includes steps of:
- applying a pickup system on the flywheel of the engine for detecting data for position, direction and speed simultaneously with using the load pickup or the position pickup; and
- applying data from the pickup system on the flywheel of the engine for backup and/or control of the timing of the lubricating oil delivery.

5. Method according to any preceding claim, **characterised in that** the method further includes steps of:
- defining various profiles for operation of the engine, for example slow steaming, MILLER timing, or other user-specified displacement; and
- timing of lubricating oil delivery depending on load with a selected operational profile.

6. Method according to any preceding claim, **characterised in that** the method further includes steps of:
- using a position pickup for directly or indirectly determining the position of the exhaust valve and detecting this position; and
- applying data from the pickup system for backup and/or control of the timing of the lubricating oil delivery.

7. A system for dosing lubricating oil into cylinders, preferably in two-stroke diesel engines, for example marine engines, the system including:
- injection units provided in the walls of the cylinders as a number of injection units are used for each cylinder;
- a lubricating apparatus for delivering a dosed amount of lubricating oil under pressure to the injection units;
- means for detecting the engine load;
- an exhaust valve connected to an actuator for displacing the exhaust valve;
- a control unit for electronic control and timing the closing time of the exhaust valve of the cylinder, depending on the detection of the engine load, as a signal is transmitted to the actuator, and as an adjustment of the closing time of the exhaust valve in relation to the actual engine load is performed, the control unit also adapted for electronic control and timing of the lubricating oil delivery, **characterised in that** the system further includes:
- a connection between the means for detecting the engine load and the control unit for transferring the detected data; and
- a connection between the control unit and the lubricating apparatus for transferring a control signal to the lubricating apparatus for adjusting the timing of the lubricating oil delivery in dependence of the engine load
wherein the means for detecting the engine load include a pickup system for detecting the closing time of the exhaust valve of the cylinder at an actual engine load,
and wherein the system is configured for applying the detection of the closing time to adjustment of timing of the lubricating oil delivery in dependence on the closing time of the exhaust valve of the cylinder such that the timing of the lubricating oil delivery is varied depending on the engine load.

8. System according to claim 7, **characterised in that** the pickup system includes:
- a load pickup for direct or indirect determination of the position of the exhaust valve and detecting this position; and/or
- a position pickup for direct or indirect determination of the position of the exhaust valve and detecting this position; the system further including
- a pickup system on the flywheel of the engine for detecting data for position, direction and speed simultaneously with using the load pickup or the position pickup.

## Patentansprüche

1. Verfahren zum Dosieren von Schmieröl in Zylinder, vorzugsweise in Zweitaktdieselmotoren, beispielsweise Marinemotoren, wobei das Verfahren folgende Schritte beinhaltet:
- Abgeben einer dosierten Menge an Schmieröl unter Druck von einer Schmiervorrichtung an Einspritzeinheiten, die in Wänden der Zylinder vorgesehen sind, wobei eine Anzahl von Einspritzeinheiten für jeden Zylinder verwendet wird;
- Erfassen der Motorlast;
- Verwenden von elektronischer Steuerung zum Takten einer Schließzeit des Auslassventils des Zylinders in Abhängigkeit von der Erfassung der Motorlast, wobei eine Einstellung der Schließzeit des Auslassventils im Zusammenhang mit der tatsächlichen Motorlast durchgeführt wird; und
- Verwenden elektronischer Steuerung zum Takten der Schmierölabgabe, **dadurch gekennzeichnet, dass** das Verfahren ferner folgende Schritte beinhaltet:
- Ermitteln von Daten zum direkten oder indirekten Bestimmen der Motorlast; und
- Anwenden der Daten der Motorlast zum Takten der Schmierölabgabe, derart, dass die Taktung der Schmierölabgabe in Abhängigkeit von der Motorlast variiert wird, wobei das Verfahren ferner folgende Schritte beinhaltet:
- Erfassen einer Schließzeit für das Auslassventil des Zylinders für eine tatsächliche Zylinderlast;
- Anwenden der Erfassung der Schließzeit auf die Einstellung der Taktung der Schmierölabgabe in Abhängigkeit von der Schließzeit des Auslassventils des Zylinders, derart, dass die Taktung der Schmierölabgabe abhängig von der Motorlast variiert wird.

2. Verfahren nach Anspruch 1, **dadurch gekennzeichnet, dass** das Verfahren ferner folgende Schritte beinhaltet:
- Anwenden der Erfassung der Schließzeit des Auslassventils des Zylinders für eine tatsächliche Zylinderlast, was auch beinhaltet, dass die Schmierölmenge in Abhängigkeit von der Motorlast variiert.

3. Verfahren nach Anspruch 2, **dadurch gekennzeichnet, dass** das Verfahren ferner folgende Schritte beinhaltet:
- Verwenden einer Positionsaufnahme zum direkten oder indirekten Bestimmen der Position des Auslassventils und zum Erfassen seiner Position;
- Verwenden der Erfassung der Positionsaufnahme zur Taktung der Schmierölabgabe.

4. Verfahren nach Anspruch 2 oder 3, **dadurch gekennzeichnet, dass** das Verfahren ferner folgende Schritte beinhaltet:
- Anwenden eines Aufnahmesystems auf das Schwungrad des Motors zum Erfassen von Daten für Position, Richtung und Drehzahl gleichzeitig mit dem Verwenden der Lastaufnahme oder der Positionsaufnahme; und
- Anwenden der Daten vom Aufnahmesystem auf das Schwungrad des Motors zur Sicherung und/oder Steuerung der Taktung der Schmierölabgabe.

5. Verfahren nach einem der vorangehenden Ansprüche, **dadurch gekennzeichnet, dass** das Verfahren ferner folgende Schritte beinhaltet:
- Definieren verschiedener Profile für den Betrieb des Motors, beispielsweise langsame Dampferzeugung, MILLER-Taktung oder eine andere vom Benutzer festgelegte Verlagerung; und
- Takten der Schmierölabgabe abhängig von der Last mit einem ausgewählten Betriebsprofil.

6. Verfahren nach einem der vorangehenden Ansprüche, **dadurch gekennzeichnet, dass** das Verfahren ferner folgende Schritte beinhaltet:
- Verwenden einer Positionsaufnahme zum direkten oder indirekten Bestimmen der Position des Auslassventils und zum Erfassen dieser Position; und
- Anwenden der Daten vom Aufnahmesystem zur Sicherung und/oder Steuerung der Taktung der Schmierölabgabe.

7. System zum Dosieren von Schmieröl in Zylinder, vorzugsweise in Zweitaktdieselmotoren, beispielsweise Marinemotoren, wobei das System Folgendes beinhaltet:
- Einspritzeinheiten, die in den Wänden der Zylinder vorgesehen sind, wobei eine Anzahl von Einspritzeinheiten für jeden Zylinder verwendet wird;
- eine Schmiervorrichtung zum Abgeben einer dosierten Menge an Schmieröl unter Druck an die Einspritzeinheiten;
- ein Mittel zum Erfassen der Motorlast;
- ein Auslassventil, das mit einem Stellglied zum Verlagern des Auslassventils verbunden ist;
- eine Steuereinheit zur elektronischen Steuerung und Taktung der Schließzeit des Auslassventils des Zylinders abhängig von der Erfassung der Motorlast, wobei ein Signal an das Stellglied übertragen wird, und wobei eine Einstellung der Schließzeit des Auslassventils im Zusammenhang mit der tatsächlichen Motorlast durchgeführt wird, wobei die Steuereinheit auch zur elektronischen Steuerung und Taktung der Schmierölabgabe angepasst ist, **dadurch gekennzeichnet, dass** das System ferner Folgendes beinhaltet:
- eine Verbindung zwischen dem Mittel zum Erfassen der Motorlast und der Steuereinheit zum Übertragen der erfassten Daten; und
- eine Verbindung zwischen der Steuereinheit und der Schmiervorrichtung zum Übertragen eines Steuersignals an die Schmiervorrichtung zum Einstellen der Taktung der Schmierölabgabe in Abhängigkeit von der Motorlast, wobei
das Mittel zum Erfassen der Motorlast ein Aufnahmesystem zum Erfassen der Schließzeit des Auslassventils des Zylinders bei einer tatsächlichen Motorlast beinhaltet, und wobei das System zum Anwenden der Erfassung der Schließzeit auf die Einstellung der Taktung der Schmierölabgabe in Abhängigkeit von der Schließzeit des Auslassventils des Zylinders derart konfiguriert ist, dass die Taktung der Schmierölabgabe abhängig von der Motorlast variiert wird.

8. System nach Anspruch 7, **dadurch gekennzeichnet, dass** das Aufnahmesystem Folgendes beinhaltet:
- eine Lastaufnahme zum direkten oder indirekten Bestimmen der Position des Auslassventils und Erfassen dieser Position; und/oder
- eine Positionsaufnahme zum direkten oder indirekten Bestimmen der Position des Auslassventils und Erfassen dieser Position; wobei das System ferner Folgendes beinhaltet:
- ein Aufnahmesystem am Schwungrad des Motors zum Erfassen von Daten für Position, Richtung und Drehzahl gleichzeitig mit dem Verwenden der Lastaufnahme oder der Positionsaufnahme.

## Revendications

1. Procédé de dosage d'huile de lubrification dans des cylindres, de préférence dans des moteurs diesel à deux temps, par exemple des moteurs marins, le procédé comprenant les étapes consistant à :
- distribuer une quantité dosée d'huile de lubrification sous pression à partir d'un appareil de lubrification vers des unités d'injection situées dans des parois des cylindres, un certain nombre d'unités d'injection étant utilisées pour chaque cylindre ;
- détecter la charge du moteur ;
- utiliser une commande électronique pour la temporisation d'un temps de fermeture de la soupape d'échappement du cylindre en fonction de la détection de la charge du moteur, quand un ajustement du temps de fermeture de la soupape d'échappement est effectué par rapport à la charge de moteur réelle ; et
- utiliser la commande électronique pour la temporisation de la distribution de l'huile de lubrification, **caractérisé en ce que** le procédé comprend en outre les étapes consistant à :
- recueillir des données pour déterminer directement ou indirectement la charge du moteur ; et
- appliquer des données de la charge du moteur à l'ajustement de la temporisation de la distribution de l'huile de lubrification de telle sorte que la temporisation de la distribution de l'huile de lubrification varie en fonction de la charge du moteur, où le procédé comprend en outre les étapes consistant à :
- détecter un temps de fermeture de la soupape d'échappement du cylindre pour une charge de cylindre réelle ;
- appliquer la détection du temps de fermeture à l'ajustement de la temporisation de la distribution de l'huile de lubrification en fonction du temps de fermeture de la soupape d'échappement du cylindre de telle sorte que la temporisation de la distribution de l'huile de lubrification varie en fonction de la charge du moteur.

2. Procédé selon la revendication 1, **caractérisé en ce que** le procédé comprend en outre les étapes consistant à :
- appliquer la détection du temps de fermeture de la soupape d'échappement du cylindre pour une charge de cylindre réelle comprenant également le fait que la quantité d'huile de lubrification varie en fonction de la charge du moteur.

3. Procédé selon la revendication 2, **caractérisé en ce que** le procédé comprend en outre les étapes consistant à :
- utiliser un capteur de position pour déterminer directement ou indirectement la position de la soupape d'échappement et détecter la position de celle-ci ;
- utiliser la détection du capteur de position pour la temporisation de la distribution de l'huile de lubrification.

4. Procédé selon la revendication 2 ou 3, **caractérisé en ce que** le procédé comprend en outre les étapes consistant à :
- appliquer un système de capteurs au volant du moteur pour la détection de données de position, direction et vitesse simultanément avec l'utilisation du capteur de charge ou du capteur de position ; et
- appliquer des données provenant du système de capteurs au volant du moteur pour la sauvegarde et/ou la commande de la temporisation de la distribution de l'huile de lubrification.

5. Procédé selon une quelconque revendication précédente, **caractérisé en ce que** le procédé comprend en outre les étapes consistant à :
- définir divers profils de fonctionnement du moteur, par exemple vitesse réduite, cycle de MILLER ou un autre déplacement spécifié par l'utilisateur ; et
- temporiser la distribution de l'huile de lubrification en fonction de la charge avec un profil opérationnel sélectionné.

6. Procédé selon une quelconque revendication précédente, **caractérisé en ce que** le procédé comprend en outre les étapes consistant à :
- utiliser un capteur de position pour déterminer directement ou indirectement la position de la soupape d'échappement et détecter cette position ; et
- appliquer des données provenant du système de capteurs pour la sauvegarde et/ou la commande de la temporisation de la distribution de l'huile de lubrification.

7. Système de dosage d'huile de lubrification dans des cylindres, de préférence dans des moteurs diesel à deux temps, par exemple des moteurs marins, le système comprenant :
- des unités d'injection situées dans les parois des cylindres, un certain nombre d'unités d'injection étant utilisées pour chaque cylindre ;
- un appareil de lubrification destiné à distribuer une quantité dosée d'huile de lubrification sous pression vers les unités d'injection ;
- un moyen destiné à détecter la charge du moteur ;
- une soupape d'échappement reliée à un actionneur pour déplacer la soupape d'échappement ;
- une unité de commande pour la commande électronique et la temporisation du temps de fermeture de la soupape d'échappement du cylindre, en fonction de la détection de la charge du moteur, quand un signal est transmis à l'actionneur, et quand un ajustement du temps de fermeture de la soupape d'échappement par rapport à la charge de moteur réelle est effectué, l'unité de commande étant également conçue pour la commande électronique et la temporisation de la distribution de l'huile de lubrification, **caractérisé en ce que** le système comprend en outre :
- une liaison entre le moyen destiné à détecter la charge du moteur et l'unité de commande destinée à transférer les données détectées ; et
- une liaison entre l'unité de commande et l'appareil de lubrification pour transférer un signal de commande à l'appareil de lubrification pour ajuster la temporisation de la distribution d'huile de lubrification en fonction de la charge du moteur où le moyen destiné à détecter la charge du moteur comprend un système de capteurs destiné à détecter le temps de fermeture de la soupape d'échappement du cylindre à une charge de moteur réelle et où le système est destiné à appliquer la détection du temps de fermeture à l'ajustement de la temporisation de la distribution de l'huile de lubrification en fonction du temps de fermeture de la soupape d'échappement du cylindre de telle sorte que la temporisation de la distribution de l'huile de lubrification varie en fonction de la charge du moteur.

8. Système selon la revendication 7, **caractérisé en ce que** le système de capteurs comprend :
- un capteur de charge destiné à déterminer directement ou indirectement la position de la soupape d'échappement et à détecter cette position ; et/ou
- un capteur de position destiné à déterminer directement ou indirectement la position de la soupape d'échappement et à détecter cette position ; le système comprenant en outre
- un système de capteurs sur le volant du moteur destiné à détecter des données de position, direction et vitesse simultanément avec l'utilisation du capteur de charge ou du capteur de position.
